Europäisches Patentamt

European Patent Office

Office européen des brevets

(19)

(11) Veröffentlichungsnummer: **0 172 584**
**B1**

(12) **EUROPÄISCHE PATENTSCHRIFT**

(45) Veröffentlichungstag der Patentschrift: **14.03.90**

(21) Anmeldenummer: **85110736.7**

(22) Anmeldetag: **14.12.81**

(60) Veröffentlichungsnummer der früheren Anmeldung nach Art. 76 EPÜ: **0 081 606**

(51) Int. Cl.⁵: **G 06 K 7/08,** G 07 F 7/02, G 07 B 15/04, G 06 K 19/08

(54) **Kontrollsystem mit Berechtigungskarte und Vorrichtung zum Entwerten.**

(43) Veröffentlichungstag der Anmeldung:
**26.02.86 Patentblatt 86/09**

(45) Bekanntmachung des Hinweises auf die Patenterteilung:
**14.03.90 Patentblatt 90/11**

(84) Benannte Vertragsstaaten:
**AT CH DE FR IT LI**

(56) Entgegenhaltungen:
**WO-A-80/01010**
**WO-A-80/01616**
**WO-A-81/03562**
**CH-A- 581 871**
**CH-A- 604 290**
**DE-A-3 001 888**
**US-A-3 578 124**
**US-A-4 040 345**

(73) Patentinhaber: **Skidata Computer Gesellschaft m.b.H.**
**Berchtesgadner Strasse 8**
**A-5083 Gartenau - St. Leonhard (AT)**

(72) Erfinder: **Wallerstorfer, Kurt**
**Elsa-Brandströmstrasse 4**
**A-5020 Salzburg (AT)**

(74) Vertreter: **Haft, Berngruber, Czybulka**
**Postfach 14 02 46 Hans-Sachs-Strasse 5**
**D-8000 München 5 (DE)**

Courier Press, Leamington Spa, England.

EP 0 172 584 B1

**Beschreibung**

Die Erfindung bezieht sich auf ein Kontrollsystem mit einer Berechtigungskarte mit einer magnetisierbaren Schicht und visuell sichtbar entwertbaren Wertfeldern für die Angabe der aktuellen Werte und mit einer Vorrichtung zur Kontrolle und zum Entwerten der Berechtigungskarte, welche Vorrichtung die auf der magnetisierbaren Schicht der Berechtigungskarte aufgezeichneten Daten abliest, in einer Rechenanlage neue Werte errechnet und die neuen Werte auf der magnetisierbaren Schicht aufzeichnet, wobei abhängig von den abgelesenen Daten und neu errechneten Werten eine Einrichtung zum visuell sichtbaren Entwerten der Wertfelder der Berechtigungskarte angesteuert wird.

Ein derartiges Kontrollsystem ist aus der US—A—4,040,345 bekannt. Durch die visuell sichtbar entwerteten Wertfelder der Karte kann dabei mit einem Blick festgestellt werden, ob die Karte bereits mehrfach benutzt worden ist. Es entsteht also eine Art Journal, das die Verfolgung einzelner Transaktionen ermöglicht. Auch ise die Fälschungssicherheit bei diesem Kontrollsystem relativ hoch, weil man neben einer Manipulation der maschinenlesbaren magnetisch aufgezeichneten Daten zur Fälschung der Karte auch die entwerteten Wertfelder bearbeiten, also zum Beispiel abkratzen oder mit Lösungsmittel behandeln muß, was jedoch visuell relativ leicht erkenbar ist.

Das visuell sichtbare Entwerten erfolgt bei dem bekannten Kontrollsystem mit einem Stempelwerk. Auf einer feuchten Karte haftet ein Stempelaufdruck aber nur schlecht, so daß er leicht verwischt werden kann. Auch läßt ein Stempelwerk keine Schutzschicht aus Kunststoff zu. Karten, die wie Wintersportkarten vor Schnee, Schmutz u. a. Umwelteinflüssen geschützt werden müssen, werden jedoch häufig mit einer solchen Schutzfolie versehen. Darüberhinaus weist ein solches Druckwerk durch die relativ großen Massen eine geringe Druckgeschwindigkeit und eine große Störungsanfälligkeit auf, und durch den Farbbandwechsel auch eine hohe Wartungsintensität.

Aus der CH—A—581 871 ist eine Punktekarte mit visuell sichtbar entwertbaren Wertfeldern bekannte, die eine thermosensitive Schicht aufweist. Der Entwerter ist dabei mit Heizelementen versehen, die die jeweilige Anzahl von Wertfeldern durch Schwärzen entwertet. Auf der anderen Seite der Karte ist eine faseroptische Leseeinrichtung vorgesehen, welche die geschwärzten Wertfelder abliest und einer Rechenanlage zuführt. Nach diesem Kontrollsystem werden also die geschwärzten Wertfelder sowohl zum visuellen wie zum maschinenlesbaren Ablesen herangezogen.

Aus der CH—A—604 290 ist eine Kreditkarte bekannt, die eine magnetisierbare Schicht und in thermoplastisches Material geprägte maschinenlesbare optische Markierungen in Form von Phasen-Hologrammen oder Phasenbeugungsgittern aufweist. Bei Benutzung wird die Karte einer Vorrichtung mit einem optische sowie mit einem magnetischen Lese- und Schreibkopf zugeführt, wobei die optischen Markierungen entwertet und die neuen Werte auf die magnetisierbare Schicht aufgezeichnet werden.

Aufgabe der Erfindung ist es, das Kartenkontrollsystem der eingangs angegebenen Art dahingehend zu verbessern, daß mit einer robusten Einrichtung die visuell sichtbaren Wertfelder schnell und auch bei ungünstigen Umwelteinflüssen sicher entwertbar sind.

Dies wird erfindungsgemäß mit einem Karten-Kontrollsystem der eingangs genannte Art erreicht, bei dem die Berechtigungskarte eine von außen sichtbare Schicht aus thermosensitivem Material aufweist, in welcher Schicht die visuell lesbaren Wertfelder durch punkt- oder strichförmige Schwärzung mittels Heizelementen entwertet werden.

Nachstehend ist eine Ausführungsform einer Vorrichtung zur Kontrolle und zum Entwerten der Berechtigungskarte sowie eine Ausführungsform der Berechtigungskarte des erfindungsgemäßen Kontrollsystems anhand der Zeichnung näher erläutert. Darin zeigen jeweils schematisch:

Fig. 1 eine Seitenansicht der Vorrichtung, wobei von dem Gehäuse der Vorrichtung eine Seitenwand entfernt worden ist;

Fig. 2 eine Draufsicht auf eine für die Vorrichtung nach Fig. 1 geeignete Berechtigungskarte mit teilweise entwerteten Wertfeldern;

Fig. 3 eine Draufsicht auf die Magnetschicht in der Berechtigungskarte nach Fig. 2 mit sichtbar gemachten magnetisierten Bereichen;

Fig. 4 einen Schnitt durch eine Bereichtigungskarte und Fig. 2 und 3;

Figur 5 eine weitere Ausführungsform der Einrichtung zum optisch sichtbaren Entwerten von mit Wertfeldern versehenen Berechtigungskarten;

Figur 6 eine Draufsicht auf die Einrichtung nach Figur 5; und

Figur 7 eine Draufsicht auf eine Berechtigungskarte mit durch die Einrichtung nach Figure 5 teilweise entwerteten Wertfeldern.

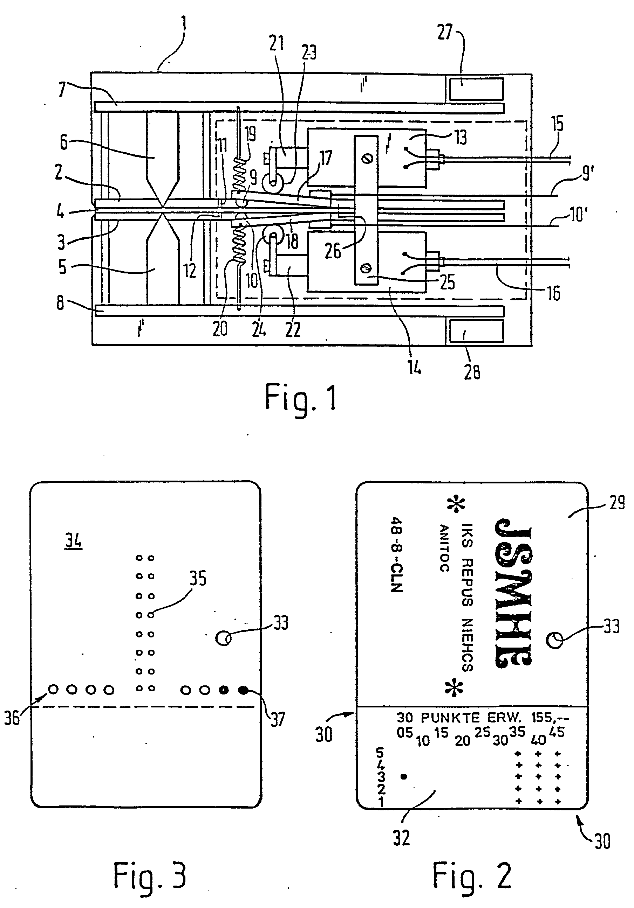

Bei der in Figur 1 dargestellten Berechtigungskarten-Kontrollvorrichtung ist in einem Gehäuse 1 zwischen einer oberen und einer unteren Führungsplatte 2 bzw. 3 ein Schlitz 4 vorgesehen, in den die in Figur 1 nicht dargestellte Berechtigungskarte eingeschoben wird. Auf der Unterseite des Schlitzes 4 sind in einer Reihe quer zur Einschubrichtung der Berechtigungskarte mehrere z.B. acht Elektromagneten angeordnet, die die Schreibeinrichtung 5 der Vorrichtung bilden.

Den Elektromagneten der Schreibeinrichtung 5 liegen auf der Oberseite des Schlitzes 4 zehn Hall-Generatoren gegenüber, die die Leseeinrichtung 6 bilden, und zwar ist jedem Elektromagneten ein Hall-Generator genau gegenüberliegend angeordnet. Zwei weitere Hall-Generatoren lesen die Taktspur, auf die nachstehend näher eingegangen wird. Die Hall-Generatoren der Leseeinrichtung 6 und die Elektromagneten der Schreibeinrichtung 5 sind an gedruckte Schaltungen 7 und 8 angeschlossen.

Weiterhin sind in Einschubrichtung hinter der Schreibeinrichtung 5 bzw. der Leseeinrichtung 6 oberhalb und unterhalb des Schlitzes 4 Heizelemente 9 bzw. 10 angeordnet. Die Heizelemente 9 bzw. 10 können aus Keramikkämmen mit Einzelheizwiderständen bestehen, die in der Größenordnung von Millisekunden auf 400°C aufgeheizt und abgekühlt werden und einzeln ansteuerbar sind.

Derartige Keramikkämme sind als Druckköpfe für thermosensitives Papier im Handel erhältlich. Die Heizelement 9 bzw. 10 sind quer zur Einschubrichtung der Berechtigungskarte angeordnet. Im Bereich der Heizelemente 9 bzw. 10 weist die obere und die untere Führungsplatte 2 bzw. 3 jeweils eine Aussparung 11 bzw. 12 auf, um die Heizelemente 9 bzw. 10 mit der Berechtigungskarte in Berührung bringen zu können.

Das Inberührungbringen der Heizelemente 9 bzw. 10 mit der Berechtigungskarte erfolgt durch Ansteuern eines zugehörigen Elektromagneten 13 bzw. 14 über elektrische Leitungen 15 bzw. 16. Dazu sind die Heizelemente 9 und 10 jeweils an einer Halterung 17 bzw. 18 befestigt, die um eine quer zur Einschubrichtung verlaufende zu den Führungsplatten 2 und 3 parallele Achse verschwenkbar an den Führungsplatten 2 bzw. 3 angeordnet sind. Die Schwenkachsen der Halterungen 17 und 18 sind in Einschubrichtung hinter den Heizelementen 9 und 10 angeordnet. Durch Zugfedern 19 und 20, die oben bzw. unten am Gehäuse 1 befestigt sind, werden die Halterungen 17 und 18 von dem Schlitz 4 weg geschwenkt.

In jedem Elektromagneten 13 bzw. 14 zum Verschwenken der Halterungen 17 bzw. 18 ist ein Anker 21 bzw. 22 in Einschubrichtung verschiebbare angeordnet. An seinem den betreffenden Heizelement 9 bzw. 10 zugewandten Ende ist jeder Anker 21 bzw. 22 mit einer Rolle 23 bzw. 24 versehen, die auf der dem Schlitz 4 abgewandten Seite der Halterung 17 bzw. 18 angreift.

Bei Erregung des betreffenden Magneten 13 bzw. 14 wird dann der Anker 21 bzw. 22 aus den Magneten 13 bzw. 14 heraus in Richtung auf das von der Feder 19 bzw. 20 nach oben bzw. unten gezogene Ende mit den Heizelementen 17 bzw. 18 bewegt, wodurch die betreffende Rolle 23 bzw. 24 die Halterung 17 bzw. 18 in Richtung auf den Schlitz 4 verschwenkt, so daß die Heizelemente 9 bzw. 10 mit der Berechtigungskarte im Schlitz 4 in Kontakt kommen können. Die Elektromagneten 13 bzw. 14 sind dabei durch Stege 25 z.B. an der oberen und der unteren Führungsplatte 2 und 3 befestigt.

Die Vorrichtung weist ferner einen Anschlag 26 für die Berechtigungskarte beim Einschieben derselben in den Schlitz 4 auf. Ferner ist ein Anschluß 27 bzw. 28 an der oberen bzw. unteren gedruckten Schaltung 7 bzw. 8 vorgesehen, wobei jeder Anschluß 27 bzw. 28 zu einer nicht dargestellten Rechenanlage führt. Dieselbe steuert die Heizelemente 9, 10 über die Anschlüsse 9' und 10' an.

Eine Ausführungsform einer Wertfelder aufweisenden Berechtigungskarte, die sich für die Vorrichtung nach Figur 1 eignet, ist in Figur 2 dargestellt. Die Berechtigungskarte oder Punktekarte ist in zwei optisch sichtbare Bereiche 29 und 30 unterteilt.

Auf dem Bereich 29 sind Angaben aufgedruckt, die für alle Punktkarten des betreffenden Wintersportgebietes gleich sind, also Name des Wintersportgebietes, Name der einzelnen Lifte und Bahnen, für die die Karte gültig ist, Werbeangaben usw.

Der Bereich 30 weist eine thermosensitive Schicht auf. In einer Spalte 31 enthält der sichtbar beschreibbare Bereich 30 der Punktekarte die Angaben, die beim Kauf der Punktekarte mit einem Thermodrucker sichtbar aufgezeichnet werden, beispielsweise die Gesamtzahl der Punkte, Art des Benutzers (Erwachsener, Kind, Freikarte und dergleichen) sowie den Preis der Karte.

Weiterhin enthält der Bereich 30 der Berechtigungskarte eine Tabelle 32. Auf der Tabelle 32 sind durch eine Ordinate und eine Abszisse die Gesamtzahl der Punkte der Punktekarte angegeben, wobei von der maximal zur Verfügung stehenden Anzahl der Punkte der Tabelle 32 diejenigen beim Kauf der Punktekarte bereits entwertet werden, die über die Gesamtzahl der Punkte nach der Spalte 31 hinausgehen. Die beim Kauf der Karte entwerteten Punkte sind in Figur 2 durch Kreuze in der Tabelle 32 dargestellt. Der übrige Teil der Tabelle 32 ist beim Kauf der Punktekarte hingegen unbeschrieben. Ein Loch 33 in der Karte dient dazu, die Karte mittels eines Bandes oder dergleichen am Benutzer zu befestigen.

Als magnetisierbarer Datenträger ist eine magnetisierbare Schicht 34 vorgesehen. Die magnetisierbare Schicht 34 erstreckt sich gemäß Figur 3 über die volle Breite der Karte und ist im Inneren der Karte angeordnet. Sie weist eine Taktspur 35 auf, die zum Positionieren der Karte beim Lesen und Beschriften der magnetisierbaren Schicht 34 sowie zum Betätigen der Elektromagneten 13 bzw. 14, also zum optisch sichtbaren Entwerten mittels der Heizelektroden 9 bzw. 10 dient. Weiterhin sind zeilenförmige Binärcodes auf die Schicht 34 aufmagnetisiert. Die Binärcodes oder bits der Zeile 36 entsprechen dabei den auf der Karte noch vorhandenen gültigen Punkten.

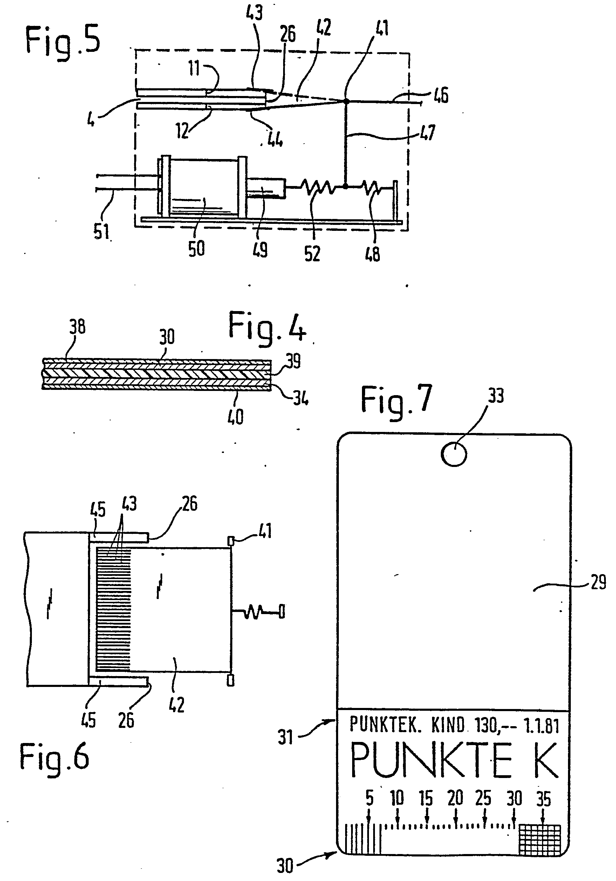

In Figur 4 ist ein Querschnitt durch eine Berechtigungskarte gezeigt. Mit 38 ist eine dünne durchsichtige Kunststoffauflage bezeichnet, mit 30 die thermosensitive Schicht, mit 39 eine Kunststoffträgerschicht, mit 34 die magnetisierbare Schicht und mit 40 eine bedruckbare Papierschicht.

Die Entwertung einer Punktekarte mit 30 Punkten bei einem Lift, bei dem je Fahrt 3 Punkte entwertet werden, erfolgt dann folgendermaßen:

Beim Einschieben der Punktekarte in den Schlitz 4 liest die Leseeinrichtung 6 von der binärcodierten Zeile 36 der Magnetschicht 34 die vorhandenen gültigen Punkte, also 30 ab, worauf die Schreibeinrichtung 5, angesteuert von der erwähnten, in der Zeichnung nicht dargestellten Rechenanlage, in binärcodierter Form 27 Punkte auf die Zeile 36 der Magnetschicht 34 schreibt, wobei die Taktspur 35 dafür sorgt, daß die Karte gegenüber der Lese- und Schreibeinrichtung beim Lesen bzw. Schreiben richtig positioniert sind.

Eine Kennmarke 37 in der Magnetschicht 34 gibt ein "high" oder "low" an, so daß die Rechenanlage die Lage der Karte, d.h. ob sich der Bereich 30 mit der thermosensitiven Schicht oben oder unten befindet, in der Weise berücksichtigen kann, daß sie entweder den Elektromagneten 13 oder den Elektromagneten 14 erregt und die Heizelemente 9 oder die Heizelemente 10 zum optisch sichtbaren Entwerten der richtigen Seite der Punktekarte ansteuert.

Die Karte wird nun bis zum Anschlag 26 im Schlitz 4 geschoben. Beim Herausziehen der Karte wird dann dasjenige der Heizelemente 9 bzw. 10 von der Rechenanlage angesteurt und erwärmt bzw. mit der Schreibspannung beaufschlagt, das bzw. die bei dem Punkt "3" nach der Tabelle 32 des thermosensitiven Bereichs 30 der Karte zu einer Schwärzung führt, wie in Figur 2 dargestellt. Die magnetische Taktspur 34 ermöglicht dabei eine genaue Positionierung des Heizelements gegenüber der Karte. Diese Schwärzung muß innerhalb von Millisekunden erfolgen, damit die Genauigkeit der Entwertung durch die Geschwindigkeit des Herausziehens der Karte nicht beeinflußt wird.

In Figur 5 und 6 ist eine weitere Ausführungsform einer Einrichtung zum optisch sichtbaren Entwerten einer Punktekarte gezeigt, bei der das zuletzt genannten Erfordernis sicher erfüllt ist. Die Einrichtung nach Figur 5 und 6 ersetzt dabei den gestrichelt eingerahmten Teil in Figur 2. Gleiche Teile sind mit denselben Bezugsziffern bezeichnet.

Gemäß Figur 5 und 6 weist die optische Entwertungseinrichtung etwa in Höhe des Führungsschlitzes 4 eine um eine quer zur karteneinschubrichtung verlaufende Achse 41 verschwenkbare, plattenförmige Halterung 42 auf, die an dem von der Schwenkachse 41 abgewandten Ende oben und unten mit streifenförmigen Heizelementen 43 bzw. 44 versehen ist, wobei jedes Heizelement 43 um die Kante der Halterung 42 mit dem betreffenden Heizelement 44 auf der anderen Seite der Halterung 42 verbunden sein kann. Über seitliche Führungsstege 45 kann die Karte durch den Führungsschlitz 4 bis zum Anschlag 26 über die gesamte Länge der Heizelemente 43 bzw. 44 geschoben werden. Die Heizelemente 43 und 44 werden von der Rechenanlage über Anschlüsse 46 angesteuert. Über einen Hebel 47 ist die Halterung 42 entgegen der Kraft der Zugfeder 48 mit dem Anker 49 eines Elektromagneten 50 verbunden, der von der Rechenanlage über Anschlüsse 51 angesteuert wird. Eine weitere Zugfeder 52 ist zwischen dem Anker 49 und dem Hebelarm 47 angeordnet. Die Feder 52 weist eine größere Federkraft als die Feder 48 auf.

In Figur 5 ist der Elektromagnet 50 im nicht erregten Zustand dargestellt. Wird durch die Kennmarke 37 der Leseeinrichtung 6 angezeigt, daß sich die thermosensitive Schicht unten befindet, verharrt der Elektromagnet 50 in diesem Zustand beim Einschieben der Karte bis über die Taktspur 35 angezeigt ist, daß sich die Karte am Anschlag 26 befindet. Durch Erregung des Elektromagneten 50 schwenkt dann die Halterung 42 nach oben, so daß die Heizelemente 43 mit dem Bereich 30 der Karte mit der thermosensitiven Schicht in Berührung kommen und dasjenige Heizelement 43, das von der Rechenanlage angesteuert worden ist, in dem Bereich 30 einen Strich aufzeichnet.

Falls durch die Kennmarke 37 hingegen angezeigt wird, daß sich die thermosensitive Schicht oben befindet, wird der Elektromagnet 50 sofort erregt, wenn die Kennmarke 37 die Leseeinrichtung 6 passiert, so daß die Halterung 42 die in Figur 5 gestrichelt dargestellte nach oben verschwenkte Position einnimmt. Der Elektromagnet 50 bleibt dann beim Einschieben der Karte so lange erregt, bis die Taktspur 35 anzeigt, daß sich die Karte am Anschlag 26 befindet, worauf der Elektromagnet 50 angeschaltet wird und durch den Zug der Feder 48 die Heizelemente 44 mit dem Bereich 30 der Karte mit der thermosensitiven Schicht in Berührung gebracht werden.

Durch den Umstand, daß der Benutzer beim Einschieben seinen Arm abbremsen muß, wenn die Karte an den Anschlag 26 auftrifft und beim Herausziehen der Karte eine Armbeschleunigung in umgekehrter Richtung erfolgen muß, sowie durch die Streifenform der Heizelemente 43 bzw. 44, ist bei dieser Ausführungsform sicher gewährleistet, daß die Heizelemente 43 bzw. 44 ausreichend lange mit der thermosensitiven Schicht in Kontakt sind, um eine Schwärzung hervorzurufen.

In Figur 7 ist eine Punktekarte dargestellt, bei der der Bereich 30 mit der thermosensitiven Schicht eine Skala mit 38 Punkten aufweist. Die entwerteten Punkte werden strichförmig angezeigt, wobei bei der dargestellten Karte bereits 7 Punkte abgebucht sind. Von der maximal zur Verfügung stehenden Punktezahl von 38 sind diejenigen beim Kauf der Karte bereits entwertet worden, die über 30 Punkte hinausgehen, falls lediglich für 30 Punkte bezahlt worden ist.

Von der Rechenanlage kann eine Absperreinrichtung, z.B. ein Drehkreuz, angesteuert werden, die nach der Kontrolle der Gültigkeit der Karte sowie Entwerten der Einzel- oder Punktekarte den Zugang zu der betreffenden Bahn bzw. Lift freigibt.

**Patentansprüche**

1. Kontrollsystem mit einer Berechtigungskarte mit einer magnetisierbaren Schicht und visuell sichtbar entwertbaren Wertfeldern für due Abgabe der aktuellen Werte und mit einer Vorrichtung zur Kontrolle und zum Entwerten der Berechtigungskarte, welche Vorrichtung die auf der magnetisierbaren Schicht der Berechtigungskarte aufgezeichneten Daten abliest, in einer Rechenanlage neue Werte errechnet und die neuen Werte auf der magnetisierbaren Schicht aufzeichnet, wobei abhängig von den abgelesenen Daten und neu errechneten Werten eine Einrichtung zum visuell sichtbaren Entwerten der Wertfelder der Berechtigungskarte angesteuert wird, dadurch gekennzeichnet, daß die Berechtigungskarte eine von außen sichtbare Schicht (30) aus thermosensitivem Material aufweist, in welcher Schicht (30) die visuell lesbaren Wertfelder durch punkt- oder strichförmige Schwärzung mittels Heizelementen (9, 10) entwertet werden.

2. Kontrollsystem nach Anspruch 1, dadurch gekennzeichnet, daß die magnetisierbare Schicht (34) eine in Längsrichtung der Karte verlaufende Taktspur (35) aufweist.

3. Kontrollsystem nach Anspruch 1 oder 2, dadurch gekennzeichnet, daß sie eine magnetische Kennmarke (37) aufweist, die der Leseeinrichtung (6) anzeigt, in welcher Lage die Karte in den Führungsschlitz (4) geschoben worden ist.

4. Kontrollsystem nach einem der Ansprüche 1 bis 3, dadurch gekennzeichnet, daß die Schicht (30) aus thermosensitivem Material mit einer dünnen durchsichtigen Kunststoffauflage (38) versehen ist.

5. Kontrollsystem nach einem der vorstehenden Ansprüche, dadurch gekennzeichnet, daß die magnetisierbare Schicht (34) mit einer bedruckbaren Papierschicht (40) versehen ist.

## Revendications

1. Système de contrôle avec une carte d'accès munie d'une couche magnétisable et de champs de valeurs dévaluables d'une manière visible à l'oeil nu et destinés à indiquer les valeurs actuelles, et avec un dispositif pour contrôler et dévaluer les cartes d'accès, dispositif qui lit les données enregistrées sur la couche magnétisable de la carte d'accès, calcule de nouvelles valeurs dans une installation informatique, et enregistre les nouvelles valeurs sur la couche magnétisable, un dispositif pour dévaluer d'une manière visible à l'oeil nu les champs de valeurs de la carte d'accès étant asservi en fonction des données lues et des valeurs nouvellement calculées, caractérisé en ce que la carte d'accès présente une couche (30) visible de l'extérieur qui est réalisée en matériau thermosensible, et dans laquelle les champs de valeurs lisibles à l'oeil nu sont dévalués par un noircissement en forme de points ou de traits, qui est réalisé par des éléments chauffants (9, 10).

2. Système de contrôle selon la revendication 1, caractérisé en ce que la couche magnétisable (34) présente une piste horloge (35) s'étendant dans la sens longitudinal de la carte.

3. Système de contrôle selon la revendication 1 ou 2, caractérisé en ce qu'il présente une marque d'identité magnétique (37) qui indique au dispositif de lecture (6) dans quelle position la carte a été enfilée dans la fente de guidage (4).

4. Système de contrôle selon l'une des revendications 1 à 3, caractérisé en ce que la couche (30) en matériau thermosensible est recouverte d'un mince revêtement de matière plastique transparente (38).

5. Système de contrôle selon l'une des revendications précédentes, caractérisé en ce que la couche magnétisable (34) est revêtue d'une couche de papier imprimable (40).

## Claims

1. A check system comprising an entitlement card having a magnetizable layer and visibly cancellable value fields for stating the current values, and an apparatus for checking and cancelling the entitlement card, said apparatus reading the data recorded on the magnetizable layer of the entitlement card, calculating new values in a computer and recording the new values on the magnetizable layer, a means being driven in accordance with the read data and newly calculated values for visually cancelling the value fields of the entitlement card, characterized in that the entitlement card has an outwardly visible layer (30) made of thermosensitive material in which layer (30) the visually readable value fields are cancelled by dot- or line-shaped blackening by means of heating elements (9, 10).

2. The check system of claim 1, characterized in that the magnetizable layer (34) has a clock track (35) extending in the longitudinal direction of the card.

3. The check system of claim 1 or 2, characterized in that it has a magnetic identification mark (37) indicating to the reading means (6) in which position the card has been inserted into the guide slot (4).

4. The check system of any of claims 1 to 3, characterized in that the layer (30) made of thermosensitive material is provided with a thin transparent plastic layer (38).

5. The check system of any of the above claims, characterized in that the magnetizable layer (34) is provided with a printable layer of paper (40).

**Fig. 1**

**Fig. 3**

**Fig. 2**

JSMHE

IKS REPUS NIEHCS

ANITOC

48-8-CLN

30 PUNKTE ERW. 155,--
05 10 15 20 25 30 35 40 45

Fig.5

Fig.4

Fig.7

Fig.6

PUNKTEK. KIND. 130,-- 1.1.81

PUNKTE K

5  10  15  20  25  30  35